# EUROPÄISCHE PATENTANMELDUNG

(11) **EP 2 674 733 A2**
(43) Veröffentlichungstag der Anmeldung: **18.12.2013**
(21) Anmeldenummer: 12005034.9
(22) Anmeldetag: 06.07.2012
(51) Int. Cl.: G01F 23/24, G01N 33/28

(54) **Messvorrichtung zum Überwachen einer Bohrlochverfüllung und Verfahren zur Bohrlochverfüllung**

(30) Priorität: 15.06.2012 DE 202012005822 U
(71) Anmelder: MAT Mischanlagentechnik GmbH, 87509 Immenstadt-Seifen (DE)
(72) Erfinder: Kleimeier, Manfred, 87527 Sonthofen (DE)
(74) Vertreter: Wunderlich, Rainer

(57) **Zusammenfassung**

Die Erfindung betrifft eine Messvorrichtung zum Ermitteln und/oder Überwachen einer Verfüllung eines Bohrlochs mit einer Baustoffsuspension und weist einen Messaufnehmer auf, welcher zum Einbringen in das Bohrloch ausgebildet ist. Der Messaufnehmer weist einen ersten Sensor zum Messen einer Materialeigenschaft eines den ersten Sensor umgebenden Mediums und beabstandet zum ersten Sensor einen zweiten Sensor zum Messen einer Materialeigenschaft eines den zweiten Sensor umgebenden Mediums auf, und elektronische Auswertemittel sind vorgesehen, die dazu eingerichtet sind, abhängig von Messwerten der Sensoren festzustellen, ob die Sensoren von verschiedenen Medien umgeben sind, und hiermit eine Aussage zu treffen, ob ein Füllstandspiegel der Baustoffsuspension zwischen den Sensoren liegt. Weiterhin ist die Erfindung auf eine Bauvorrichtung mit einer erfindungsgemäßen Messvorrichtung gerichtet sowie auf ein Verfahren zum Erstellen eines verfüllten Bohrlochs, insbesondere mittels einer erfindungsgemäßen Mess-oder Bauvorrichtung.

## Beschreibung

Die vorliegende Erfindung bezieht sich auf eine Messvorrichtung zum Ermitteln und/oder Überwachen einer Verfüllung eines Bohrlochs mit einer Baustoffsuspension nach dem Oberbegriff des Anspruchs 1. In einem weiteren Gesichtspunkt bezieht sich die Erfindung auf ein Verfahren zum Erstellen eines verfüllten Bohrlochs nach dem Oberbegriff des Anspruchs 15.

Bei gattungsgemäßen Messvorrichtungen ist ein Messaufnehmer vorhanden, welcher zum Einbringen in das Bohrloch ausgebildet ist. Insbesondere können die Abmessungen und Gehäusewände des Messaufnehmers geeignet gewählt sein, um den Messaufnehmer in das Bohrloch einzubringen und einen ausreichenden Schutz von Komponenten innerhalb des Messaufnehmers bereitzustellen.

Durch das Ermitteln und/oder Überwachen der Verfüllung soll insbesondere erkannt werden, ob die in das Bohrloch eingebrachte Baustoffsuspension das Bohrloch an der Höhe des Messaufnehmers sicher verpresst, also dichtend schließt. Ein Abfließen der Baustoffsuspension an der Höhe des Messaufnehmers oder unterhalb des Messaufnehmers soll erkannt werden.

Mangelhaft verfüllte Bohrlöcher, bei denen das Bohrloch nicht durchgängig dichtend mit Baustoffsuspension verfüllt ist, können ein Durchlassen von Grundwasser nicht sicher verhindern. In diesem Fall kann Grundwasser aus einer oberen Bodenschicht über das mangelhaft verfüllte Bohrloch in eine tiefere Bodenschicht gelangen. Das Bohrloch bildet also durch eine grundwasserstauende Schicht einen Durchlass, der auch als hydraulischer Kurzschluss zwischen zwei grundwasserleitenden Schichten bezeichnet wird. Hierdurch kann es zu Grundwasserverunreinigungen oder Versalzungen in tieferen Bodenschichten kommen. Zudem kann auch ein Absacken der oberen Bodenschicht drohen, wenn aus dieser Grundwasser abgeflossen ist.

Damit ein Bohrloch dichtend mit Baustoffsuspension verfüllt werden kann, ist es daher wünschenswert, einen momentanen Füllstandspiegel der Baustoffsuspension möglichst genau zu kennen. So wird auch in staatlichen Vorschriften ein Ermitteln des Füllstandspiegels mit einer Genauigkeit von zwei Metern gefordert.

Mit herkömmlichen Messvorrichtungen kann eine solche Genauigkeit nicht erreicht werden. Eine bekannte Messvorrichtung ist zum Beispiel in DE 20 2011 107 616 U1 beschrieben. Hier ist als Messaufnehmer ein Drucksensor zum Messen des Drucks im Bohrloch vorgesehen. Ein durch die eingebrachte Baustoffsuspension verursachter Druck kann abfallen, wenn die Baustoffsuspension in den Boden, der das Bohrloch umgibt, abfließt. Daher kann aus dem Druckverlauf darauf geschlossen werden, ob das Bohrloch an der Höhe des Messaufnehmers sicher abgedichtet ist.

Dieser indirekte Rückschluss auf den Füllstandspiegel im Bohrloch erlaubt jedoch keine befriedigenden Genauigkeiten. Eine sichere Verfüllung eines Bohrlochs kann hiermit nicht erreicht werden.

Als eine **Aufgabe** der Erfindung kann angesehen werden, eine Messvorrichtung bereitzustellen, welche ein besonders genaues Überwachen der Verfüllung eines Bohrlochs ermöglicht. Zudem soll ein Verfahren angegeben werden, mit dem ein Bohrloch besonders sicher verfüllt werden kann.

Diese Aufgabe wird durch die Messvorrichtung mit den Merkmalen des Anspruchs 1 und das Verfahren mit den Merkmalen des Anspruchs 15 gelöst.

Vorteilhafte Ausgestaltungen der erfindungsgemäßen Messvorrichtung und des erfindüngsgemäßen Verfahrens sind Gegenstand der abhängigen Ansprüche und werden außerdem in der folgenden Beschreibung, insbesondere im Zusammenhang mit den Figuren, beschrieben.

Bei der Messvorrichtung der oben genannten Art ist erfindungsgemäß vorgesehen, dass der Messaufnehmer einen ersten Sensor zum Messen einer Materialeigenschaft eines den ersten Sensor umgebenden Mediums aufweist, dass der Messaufnehmer beabstandet zum ersten Sensor einen zweiten Sensor zum Messen einer Materialeigenschaft eines den zweiten Sensor umgebenden Mediums aufweist und dass elektronische Auswertemittel vorgesehen sind, die dazu eingerichtet sind, abhängig von Messwerten der Sensoren festzustellen, ob die Sensoren von verschiedenen Medien umgeben sind, und hiermit eine Aussage zu treffen, ob ein Füllstandspiegel der Baustoffsuspension zwischen den Sensoren liegt.

Als ein erster grundlegender Gedanke der Erfindung kann erachtet werden, Sensoren vorzusehen, deren Messwerte von einer Materialeigenschaft abhängen, die für die eingebrachte Baustoffsuspension und für Grundwasser verschieden ist. Aus der ermittelten Materialeigenschaft kann daher zurückgeschlossen werden, ob es sich bei dem Medium, das den jeweiligen Sensor umgibt, um Baustoffsuspension oder Grundwasser handelt.

Indem erfindungsgemäß mindestens zwei Sensoren vorgesehen sind, können an zwei verschiedenen Höhen im Bohrloch eine Materialeigenschaft der Medien, die die Sensoren umgeben, ermittelt werden. So kann erkannt werden, ob der Füllstandspiegel der Baustoffsuspension, der auch als Verpresshorizont bezeichnet werden kann, zwischen den beiden Sensoren liegt. Eine Genauigkeit der Höhenangabe des Füllstandspiegels hängt dann vom Abstand der beiden Sensoren zueinander ab.

Damit Messgenauigkeiten von besser als zwei Metern erreicht werden, kann der Abstand zwischen den beiden Sensoren kleiner als zwei Meter gewählt sein, bevorzugt zwischen 20cm und 1 m.

Im Gegensatz zu einem herkömmlichen Drucksensor, der nur eine indirekte Angabe über den Füllstandspiegel erlaubt, kann mit der erfindungsgemäßen Messvorrichtung eine direkte Messung des Füllstandspiegels erfolgen.

Bevorzugt handelt es sich bei der Materialeigenschaft, die die Messwerte der Sensoren bestimmt, um die elektrische Leitfähigkeit beziehungsweise den spezifischen elektrischen Widerstand. In diesem Fall weisen die Sensoren jeweils ein Elektrodenpaar auf zum Bestimmen des elektrischen Leitwerts des Mediums, das den jeweiligen Sensor umgibt und eine elektrische Verbindung zwischen Elektroden des jeweiligen Elektrodenpaares erzeugt. Der elektrische Leitwert, der als Kehrwert des elektrischen Widerstands definiert ist, wird durch den Weg zwischen den Elektroden eines Elektrodenpaares und durch die elektrische Leitfähigkeit des Mediums bestimmt.

An Hand des gemessenen elektrischen Leitwerts können so verschiedene Materialien sicher unterschieden werden. Typische Werte der elektrischen Leitfähigkeit sind:
Destilliertes Wasser: 5 µS/cm
Niederschlagswasser: 60 ― 100 µS/cm
Grundwasser: 100 ― 2500 µS/cm
Meerwasser: 50000 µS/cm,
wobei S für die Einheit Siemens steht.

Die elektrische Leitfähigkeit einer Baustoffsuspension weicht in der Regel deutlich von diesen Werten ab. Dabei hängt der genaue Zahlenwert von der konkreten Zusammensetzung der Baustoffsuspension ab.

An jedem Elektrodenpaar kann nun eine Spannung angelegt werden. Eine Bestimmung des elektrischen Widerstands zwischen den Elektroden eines Elektrodenpaares durch das umgebende Medium erlaubt nun einen Rückschluss auf das Material dieses Mediums. Hierbei kann anstelle des elektrischen Widerstands auch der elektrische Strom durch das Medium gemessen werden.

Prinzipiell können auch andere Materialeigenschaften zur Unterscheidung der Baustoffsuspension von anderen Substanzen, insbesondere von Grundwasser, genutzt werden. Beispielsweise können sich Baustoffsuspensionen von Grundwasser in Hinblick auf die Abschwächung akustischer Wellen oder elektromagnetischer Strahlung unterscheiden. Daher kann vorgesehen sein, dass zum Rückschließen auf die Medien, die die Sensoren umgeben, die Sensoren jeweils einen Sender zum Ausstrahlen elektromagnetischer oder akustischer Wellen und einen Empfänger aufweisen, der vom zugehörigen Sender abgestrahlte und durch das umgebende Medium transmittierte Wellen misst. Alternativ oder zusätzlich können die Sensoren auch jeweils einen Dichtesensor zum Bestimmen der Dichte der sie umgebenden Medien aufweisen. Während Wasser eine Dichte von etwa 1g/cm³ hat, ist die Dichte von Baustoffsuspensionen in der Regel größer als 1,3g/cm³. Grundsätzlich kommt als Materialeigenschaft zudem die Ausbreitungsgeschwindigkeit von akustischen Wellen oder die Rückstreuung akustischer oder elektromagnetischer Wellen in Betracht. Auch eine Druckmessung mit mindestens zwei Sensoren ist möglich. Bevorzugt ist aber die zuvor beschriebene Messung von elektrischen Eigenschaften der Medien, wozu die Sensoren jeweils ein Elektrodenpaar umfassen.

Bei einer bevorzugten Ausgestaltung der erfindungsgemäßen Messvorrichtung sind zum Bestimmen, ob der Füllstandspiegel der Baustoffsuspension zwischen den Sensoren liegt, die elektronischen Auswertemittel dazu eingerichtet, aus Messwerten der Sensoren eine Differenz abzuleiten, diese mit einem Schwellwert zu vergleichen und bei Überschreiten des Schwellwerts darauf zu schließen, dass der Füllstandspiegel der Baustoffsuspension zwischen den Sensoren liegt. Vorteilhafterweise sind durch eine Differenzbildung exakte Kenntnisse der Materialeigenschaften der Baustoffsuspension und des Grundwassers nicht nötig. In den Fällen, dass beide Sensoren von Baustoffsuspension oder beide Sensoren von Grundwasser umgeben sind, ist die Differenz gering. Hingegen ist die Differenz groß, wenn nur einer der Sensoren von Baustoffsubstanz umgeben ist und der andere Sensor von einer anderen Substanz, insbesondere Grundwasser, umgeben ist.

Alternativ oder zusätzlich können die Messwerte der Sensoren aber auch jeweils mit Referenzwerten verglichen werden, um auf das Material der umgebenden Medien zu schließen. So kann vorgesehen sein, dass die elektronischen Auswertemittel dazu eingerichtet sind, die Messwerte der Sensoren mit Referenzwerten von Materialien zu vergleichen, insbesondere mit Referenzwerten der Baustoffsuspension und/oder von Grundwasser, und abhängig von dem Vergleich auszugeben,
- dass der Füllstandspiegel der Baustoffsuspension oberhalb der Sensoren liegt, wenn die Messwerte der Sensoren jeweils einem Referenzwert der Baustoffsuspension ähneln,
- dass der Füllstandspiegel der Baustoffsuspension zwischen den Sensoren liegt, wenn der Messwert von nur einem der Sensoren einem Referenzwert der Baustoffsuspension ähnelt, oder
- dass der Füllstandspiegel der Baustoffsuspension unterhalb der Sensoren liegt, wenn von keinem Sensor der Messwert einem Referenzwert der Baustoffsuspension ähnelt.

Unter dem Ähneln kann verstanden werden, dass die Differenz des Messwerts zum Referenzwert der Baustoffsuspension einen vorgegebenen Grenzwert unterschreitet und/oder kleiner ist als die Differenz des Messwerts zu einem Referenzwert von Grundwasser.

Weil die Beschaffenheit von Grundwasser ortsabhängig variieren kann und auch verschiedene Baustoffsuspensionen zum Einsatz kommen können, ist es bevorzugt, dass in einem Einlernmodus Messwerte der Sensoren als Referenzwerte einlernbar sind.

Bei einer Variante der Erfindung werden demgemäß in dem Einlernmodus ein Messwert einer Baustoffsuspension als ein Referenzwert und/oder ein Messwert von Grundwasser als ein Referenzwert eingelernt. Das Grundwasser kann dabei aus dem Bohrloch oder angrenzend hierzu entnommen sein. Zweckmäßigerweise handelt es sich bei der Baustoffsuspension, die zum Einlernen eines Referenzwerts genutzt wird, um die gleiche Baustoffsuspension, mit der das Bohrloch verfüllt werden soll.

Um den Messaufnehmer in das Bohrloch einzubringen, sind bevorzugt Mittel zum variablen Höheneinstellen des Messaufnehmers vorhanden. So kann vorgesehen sein, dass zum Absenken des Messaufnehmers in das Bohrloch und zum Übertragen von Messwerten des Messaufnehmers ein Messkabel vorgesehen ist, das mit dem Messaufnehmer verbunden ist. Zur Höhenbestimmung des Messaufnehmers im Bohrloch kann eine Wegmesseinrichtung vorhanden ist, die eine Länge eines Abschnitts des Messkabels, welcher in das Bohrloch eingelassen ist, misst. Hierzu kann beispielsweise ermittelt werden, um welche Länge das Messkabel von einer Kabeltrommel abgerollt ist. Das Messkabel kann freihängend in das Bohrloch eingebracht werden oder mit einer Lanze zum Einführen der Baustoffsuspension und/oder mit einem Bohrwerkzeug verbunden sein.

Prinzipiell kann auch auf ein Messkabel verzichtet werden, wenn der Messaufnehmer an der Lanze und/oder dem Bohrwerkzeug angebracht ist, eine Höhenbestimmung des Messaufnehmers über die Position der Lanze und/oder des Bohrwerkzeugs erfolgt und eine Datenübertragung des Messaufnehmers per Funk oder über ein Kabel des Bohrwerkzeugs oder der Lanze durchgeführt wird.

Es ist vorteilhaft, wenn der Füllstandspiegel nicht nur bezüglich der Sensoren des Messaufnehmers, sondern auch in Bezug auf eine Bodenoberfläche, an welcher das Bohrloch erzeugt ist, ermittelt werden kann. Um dies zu ermöglichen, können die elektronischen Auswertemittel dazu eingerichtet sind, an Hand der mit der Wegmesseinrichtung ermittelten Höhe des Messaufnehmers den Messwerten der Sensoren eine Höhe zuzuordnen und hiermit eine Höhenangabe des Füllstandspiegels der Baustoffsuspension auszugeben.

Für einen hohen Bedienungskomfort kann mit einer Anzeigeeinrichtung eine Angabe, ob der Füllstandspiegel der Baustoffsuspension zwischen den Sensoren liegt, zusammen mit der zugehörigen Höhe des Messaufnehmers angezeigt werden. Die Anzeigeeinrichtung kann mit dem Messkabel über Schleifringkörper an der Kabeltrommel verbunden sein. Mittels einer Schnittstelle an der Anzeigeeinrichtung können die Messwerte auch an weitere Vorrichtungen, insbesondere an eine Bauvorrichtung zum Verfüllen des Bohrlochs, übertragen werden.

Zweckmäßigerweise kann der Messaufnehmer eine längliche Form haben und die Sensoren können sich an verschiedenen Höhen entlang der länglichen Form befinden.

Die Elektroden der beiden Elektrodenpaare können an einer Außenseite des Messaufnehmers angeordnet sein. Bei einer rohrförmigen Gestaltung des Messaufnehmers mit einem inneren durchgängigen Hohlraum können die Elektrodenpaare auch an einer Seite zum Hohlraum hin vorgesehen sein. In beiden Fällen können die Elektrodenpaare eine Longitudinalachse des Messaufnehmers umschließen oder zumindest die halbe Umfangslänge des Messaufnehmers abdecken. Durch solch eine umlaufende Gestaltung der Elektroden kann ein verhältnismäßig großer Messbereich durch die umgebenden Medien hindurch bereitgestellt werden. Damit kann die Messgenauigkeit erhöht werden. Die beiden Elektroden eines Elektrodenpaares können untereinander angeordnet sein.

Um eine vertikale Ausrichtung des Messaufnehmers im Bohrloch zu erreichen, ist der der Messaufnehmer so ausgestaltet, dass seine Dichte höher als die der Baustoffsuspension ist. Beispielsweise kann die Dichte größer als 2g/cm³ oder großer als 3g/cm³ gewählt sein.

Eine besonders genaue Höhenbestimmung des Füllstandspiegels der Baustoffsuspension kann erreicht werden, wenn der Messaufnehmer mehr als zwei Sensoren zum Bestimmen einer Materialeigenschaft des jeweils umgebenden Mediums aufweist.

Alternativ oder zusätzlich kann auch vorgesehen sein, dass zum Einstellen einer Genauigkeit der Höhenbestimmung des Füllstandspiegels mindestens einer der Sensoren am Messaufnehmer höhenverstellbar ist. Hierdurch kann der Höhenabstand zwischen den Sensoren variiert werden. Dieser Höhenabstand bestimmt die Genauigkeit, mit der der Füllstandspiegel bekannt ist, wenn die Messwerte der Sensoren aussagen, dass unterschiedliche Materialien die Sensoren umgeben. Für solch eine Variation des Sensorabstands kann der Messaufnehmer beispielsweise als teleskopierbare Röhre ausgeführt sein.

Bei einer weiteren bevorzugten Ausführung der erfindungsgemäßen Messvorrichtung ist ein Antrieb zum Höhenverstellen des Messaufnehmers vorgesehen. Dieser kann insbesondere ein Drehantrieb an einer Kabeltrommel sein, auf die das Messkabel aufgerollt ist. Bei dieser Ausführung können zudem elektronische Steuermittel vorgesehen sein, die dazu eingerichtet sind, über den Antrieb den Messaufnehmer im Bohrloch abzusenken, wenn die elektrischen Auswertemittel feststellen, dass der Füllstandspiegel der Baustoffsuspension unterhalb der Sensoren liegt, und den Messaufnehmer im Bohrloch zu heben, wenn die elektrischen Auswertemittel feststellen, dass der Füllstandspiegel der Baustoffsuspension oberhalb der Sensoren liegt. Somit kann eine automatische Steuerung bereitgestellt werden, mit der der Messaufnehmer stets an eine Höhe gefahren wird, an der der Füllstandspiegel gerade zwischen den Sensoren des Messaufnehmers liegt.

Die Erfindung betrifft außerdem eine Bauvorrichtung zum Verfüllen eines Bohrlochs mit einer Baustoffsuspension, wobei die Bauvorrichtung eine Lanze zum Leiten der Baustoffsuspension in das Bohrloch aufweist. Diese Bauvorrichtung weist eine erfindungsgemäße Messvorrichtung, wie vorstehend beschrieben, auf.

Die Lanze kann auch als Seelenrohr eines Bohrwerkzeugs oder einer Bohrschnecke ausgeführt sein.

Die Erfindung betrifft auch ein Verfahren zum Erstellen eines verfüllten Bohrlochs, insbesondere mit einer erfindungsgemäßen Mess- oder Bauvorrichtung. Bei dem Verfahren wird eine Baustoffsuspension zum Verfüllen eines Bohrlochs in dieses eingebracht und es wird zum Überwachen des Verfüllens des Bohrlochs ein Messaufnehmer in das Bohrloch eingebracht. Es ist vorgesehen, dass mit dem Messaufnehmer an einer ersten Höhe und an einer zweiten Höhe im Bohrloch jeweils mindestens ein Messwert zu einer Materialeigenschaft eines den Messaufnehmer umgebenden Mediums aufgenommen wird, dass abhängig von den Messwerten, die an der ersten Höhe und der zweiten Höhe aufgenommen sind, ermittelt wird, ob sich verschiedene Materialien an diesen Höhen befinden, und dass abhängig davon, ob verschiedene Materialien an der ersten und der zweiten Höhe ermittelt werden, eine Aussage getroffen wird, ob ein Füllstandspiegel der Baustoffsuspension zwischen der ersten und der zweiten Höhe liegt.

Eine Steuerung der Zufuhr der Baustoffsuspension, insbesondere der Höhe der Zufuhr der Baustoffsuspension, kann abhängig von dem ermittelten Füllstandspiegel erfolgen. Beispielsweise kann vorgesehen sein, dass ein Anheben der Höhe der Zufuhr von Baustoffsuspension nur dann erfolgt, wenn ein Füllstandspiegel für eine vorgegebene Zeit eine vorgegebene Höhe nicht unterschreitet.

Erfindungsgemäße Verfahrensvarianten ergeben sich durch bestimmungsgemäße Verwendung der Ausführungsbeispiele der erfindungsgemäßen Messvorrichtung und der erfindungsgemäßen Bauvorrichtung.

Wird eine erfindungsgemäße Messvorrichtung zum Durchführen des erfindungsgemäßen Verfahrens verwendet, so ist die genannte erste Höhe durch die Position des ersten Sensors gegeben und die zweite Höhe ist durch die Position des zweiten Sensors festgelegt.

Alternativ kann aber auch vorgesehen sein, dass die Messwerte an der ersten und der zweiten Höhe nacheinander aufgenommen werden. In diesem Fall kann ein Messaufnehmer mit einem einzigen Sensor, der nacheinander an die beiden Höhen gebracht wird, genutzt werden.

Das Bohrloch kann prinzipiell für beliebige Zwecke erstellt werden. Zum Beispiel kann es einer Erkundungsbohrung, einem Brunnenbau oder einer Bohrung nach Wasser dienen. Bei einer bevorzugten Verfahrensvariante wird das Bohrloch zum Einbauen einer Erdwärmesonde genutzt. Hierbei ist vorgesehen, dass vor dem Verfüllen mit Baustoffsuspension eine Erdwärmesonde in das Bohrloch eingebracht wird.

Weitere Vorteile und Merkmale der Erfindung werden nachstehend mit Bezug auf die beigefügten schematischen Figuren beschrieben. Hierin zeigen:
- Fig. 1: eine schematische Darstellung eines Ausführungsbeispiels einer erfindungsgemäßen Bauvorrichtung zum Verfüllen eines Bohrlochs mit einer Baustoffsuspension und
- Fig. 2: eine schematische Darstellung von Komponenten eines Ausführungsbeispiels einer erfindungsgemäßen Messvorrichtung.

Gleiche und gleich wirkende Bestandteile sind in den Figuren in der Regel mit denselben Bezugszeichen gekennzeichnet.

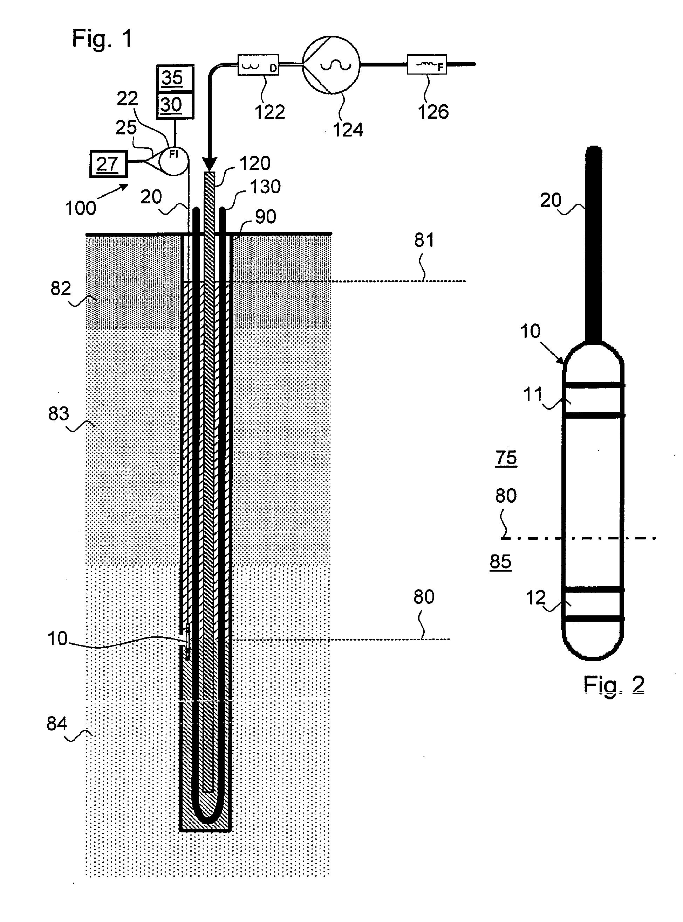

Fig. 1 zeigt ein Ausführungsbeispiel einer erfindungsgemäßen Bauvorrichtung 110 zum Verfüllen eines Bohrlochs 90 mit einer Baustoffsuspension 85.

Das Bohrloch 90 kann je nach Beschaffenheit des Bodens und je nach Bohrtiefe durch eine Trockenbohrung oder im Spülbohrverfahren als verrohrte oder unverrohrte Bohrung hergestellt sein.

Im gezeigten Fall ist in das Bohrloch 90 eine Erdwärmesonde 130 eingebracht, mit der Wärmeenergie aus tieferen Schichten aufwärts geleitet werden kann. Prinzipiell kann das Bohrloch 90 aber auch zu beliebigen anderen Zwecken erzeugt sein.

Der Boden umfasst im dargestellten Beispiel mehrere Schichten, von denen eine obere Schicht 82 und eine untere Schicht 84 leitend für Grundwasser sind, während eine dazwischen liegende Schicht 83 grundwassersperrend ist.

Um zu vermeiden, dass zwischen der oberen und unteren Schicht 82, 84 ein hydraulischer Kurzschluss entsteht, das heißt, Grundwasser von einer Schicht in die andere Schicht gelangt, soll das Bohrloch 90 dichtend mit einer Baustoffsuspension 85 verfüllt werden.

Hierzu wird zunächst eine Lanze oder Verpresslanze 120 in das Bohrloch 90 eingeführt. Die Lanze 120 kann auch als Seelenrohr eines Bohrwerkzeugs oder an einer Bohrschnecke ausgeführt sein. Mit einer Verpresspumpe 124 wird die Baustoffsuspension 85 über die Lanze 120 in das Bohrloch 90 gepumpt, so dass dieses von unten aufgefüllt wird.

Weil die Dichte von Baustoffsuspensionen 85 höher ist als die von Wasser oder Grundwasser 75, verbleibt die eingebrachte Baustoffsuspension 85 im unteren Bereich des Bohrlochs 90, während sich oberhalb von dieser Grundwasser 75 sammelt. Dadurch entsteht ein veränderlicher Füllstandspiegel 80, bis zu dem das Bohrloch 90 mit Baustoffsuspension 85 gefüllt ist. Oberhalb des Füllstandspiegels 80 kann sich im Bohrloch 90 Grundwasser bis zu einem Grundwasserspiegel 81 befinden.

Entscheidend für ein dichtendes Verfüllen des Bohrlochs 90 ist die Kenntnis des momentanen Füllstandspiegels 80, der auch als Baustoffhorizont 80 bezeichnet wird. Abhängig hiervon können Menge und/oder Einfüllhöhe der Baustoffsuspension 85 über die Lanze 120 gesteuert werden.

Zur Kontrolle eines Füll- oder Verpressvorgangs sind eine Druckmesseinrichtung 122 und eine Durchfluss- und/oder Dichtemesseinrichtung 126 an einer der Lanze 120 vorgeschalteten Leitung vorhanden. Hiermit allein kann aber nicht mit gewünschter Genauigkeit auf den Füllstandspiegel 80 rückgeschlossen werden. Auch im Stand der Technik bekannte Maßnahmen, insbesondere das Einbringen eines Drucksensors in das Bohrloch 90, erlauben keine präzise Aussage über den Füllstandspiegel 80.

Dieser Nachteil wird erfindungsgemäß durch eine Messvorrichtung 100 überwunden. Diese kann Bestandteil der Bauvorrichtung 110 sein oder eine davon getrennte Einheit.

Die Messvorrichtung 100 weist als wesentliche Komponente einen Messaufnehmer 10 auf. Dieser wird in das Bohrloch 90 eingeführt und dient der Ermittlung des Füllstandspiegels 80.

Der Aufbau eines Messaufnehmers 10 eines Ausführungsbeispiels einer erfindungsgemäßen Messvorrichtung 100 wird mit Bezug auf Figur 2 beschrieben.

Der Messaufnehmer 10 hat eine längliche Form, die sich in vertikaler Richtung im Bohrloch 90 erstreckt. An einem oberen Ende ist ein Messkabel 20 angebracht. Über dieses werden Messsignale des Messaufnehmers 10 übertragen. Zudem kann eine Höheneinstellung des Messaufnehmers 10 über das Messkabel 20 erfolgen.

An einem oberen Bereich des Messaufnehmers 10 befindet sich ein erster Sensor 11 und an einem unteren Bereich befindet sich ein zweiter Sensor 12. Prinzipiell kann eine beliebige Anzahl weiterer Sensoren zwischen diesen vorgesehen sein.

Im dargestellten Beispiel weist jeder Sensor 11, 12 ein Elektrodenpaar auf, an die im Messbetrieb jeweils eine Spannung angelegt werden kann. Abhängig vom umgebenden Medium kann ein Strom von einer Elektrode eines Elektrodenpaares zur anderen Elektrode desselben Elektrodenpaares fließen. Der Messaufnehmer 10 ist dazu konfiguriert, den elektrischen Strom und/oder Widerstand der durch das umgebende Medium erzeugten elektrischen Leitung zu ermitteln. Hierdurch können verschiedene Materialien unterschieden werden.

Der obere Sensor 11 wird von einem Medium 75 und der untere Sensor 12 von einem Medium 85 umgeben. Weil bei dem in Figur 2 gezeigten Fall der Füllstandspiegel 80 gerade zwischen den beiden Sensoren 11 und 12 liegt, handelt es sich bei dem unteren Medium 85 um Baustoffsuspension und bei dem oberen Medium 75 um Grundwasser. In anderen Situation kann es sich bei beiden Medium 75, 85 um Grundwasser handeln oder um Baustoffsuspension.

Messwerte der Elektrodenpaare der beiden Sensoren 11 und 12 hängen nun von einer Materialeigenschaft des sie jeweils umgebenden Mediums 75 und 85 ab, nämlich von der elektrischen Leitfähigkeit beziehungsweise dem spezifischen Widerstand. Daher liefert der Sensor 11 einen für Grundwasser charakteristischen Messwert, während der Sensor 12 einen hiervon verschiedenen und für Baustoffsuspension charakteristischen Messwert liefert.

Durch diese unterschiedlichen Messwerte kann mit elektrischen Auswertemitteln 30, die schematisch in Figur 1 dargestellt sind, darauf geschlossen werden, dass der Füllstandspiegel 80 zwischen den beiden Sensoren 11 und 12 liegt. Die Auswertemittel 30 können prinzipiell innerhalb des Messaufnehmers 10 oder auch in einer Einrichtung außerhalb des Bohrlochs 90 angeordnet sein.

Eine besonders zuverlässige Unterscheidung zwischen der Baustoffsuspension 85 und dem Grundwasser 75 wird möglich, wenn der Messaufnehmer 10 in einem Einlernmodus Referenzwerte für diese Materialien 75, 85 einlernen kann. In diesem Fall kann außerhalb des Bohrlochs der Messaufnehmer 10 nacheinander in Kontakt gebracht werden mit Grundwasser 75, das aus oder neben dem Bohrloch entnommen ist, und mit der Baustoffsuspension 85, mit der das Bohrloch 90 verfüllt werden soll. Die jeweils aufgenommenen Messwerte werden als Referenzwerte gespeichert.

Im Messbetrieb können im Bohrloch 90 aufgenommene Messwerte nun mit den Referenzwerten verglichen werden, womit die Messwerte zuverlässig einem eingelernten Material zugeordnet werden können.

Bei einer alternativen oder zusätzlichen Ausgestaltung wird basierend auf einer Messwertdifferenz, die aus den Messwerten der beiden Sensoren 11 und 12 abgeleitet wird, bestimmt, ob der Füllstandspiegel 80 zwischen den Sensoren 11 und 12 liegt. Sind beide Sensoren 11 und 12 von demselben Material umgeben, ist die Messwertdifferenz gering. Hingegen ist die Messwertdifferenz groß, wenn der untere Sensor 12 von Baustoffsuspension 85 umgeben wird und der obere Sensor 11 von Grundwasser 75. Daher kann darauf geschlossen werden, dass der Füllstandspiegel 80 zwischen den Sensoren 11 und 12 liegt, wenn die Messwertdifferenz einen vorgegebenen Schwellwert überschreitet. Durch dieses Vorgehen wird eine höhere Robustheit gegenüber Schwankungen in der Zusammensetzung des Grundwassers und/oder der Baustoffsuspension erreicht.

Bei einer erfindungsgemäßen Verfahrensvariante werden Messwerte an verschiedenen Höhen im Bohrloch 90 nacheinander aufgenommen. In diesem Fall kann bereits ein einziger Sensor ausreichen, mit dem nacheinander die beiden Höhen angefahren werden, die den Positionen der zuvor beschriebenen Sensoren 11 und 12 entsprechen. So kann deren Funktionen durch einen einzigen Sensor ausgeführt werden.

Gemäß einem allgemeinen Grundgedanken der Erfindung kann auch bereits aus dem Messwert eines einzigen Sensors die Höhe des Füllstandspiegels 80 bestimmt werden. Hierzu wird genutzt, dass die elektrische Leitfähigkeit des Mediums, welches das Elektrodenpaar des einzigen Sensors umgibt, unterschiedlich ist für die Fälle, dass allein Grundwasser den Sensor umgibt, dass allein Baustoffsuspension den Sensor umgibt oder dass der Füllstandspiegel 80 gerade zwischen den beiden Elektroden des Elektrodenpaares liegt. Zuverlässigere Ergebnisse können jedoch erzielt werden, wenn mindestens zwei Sensoren 11, 12 an verschiedenen Höhen am Messaufnehmer 10 vorhanden sind.

Damit aus der Angabe, ob der Füllstandspiegel 80 der Baustoffsuspension 85 zwischen den Sensoren 11 und 12 liegt, auf eine absolute Höhe des Füllstandspiegels 80 geschlossen werden kann, das heißt auf eine Höhe bezüglich der Bodenoberfläche, ist eine Kenntnis der absoluten Höhe des Messaufnehmers 10 wünschenswert.

Die hierzu vorhandenen Mittel werden mit Bezug auf Figur 1 beschrieben. Dort ist das Messkabel 20, das die Absenktiefe des Messaufnehmers 10 definiert, an einer Kabeltrommel 22 mit einer Wegmesseinrichtung 25 angeordnett. Die Wegmesseinrichtung 25 ermittelt die Länge, um die das Messkabel 20 von der Kabeltrommel 22 abgerollt ist, womit auf die Länge des Messkabels 20 im Bohrloch 90 geschlossen werden kann.

Bevorzugt ist ein Antrieb 27 an der Kabeltrommel 22 angebracht, womit das Messkabel motorisch in das Bohrloch 90 eingebracht werden kann. Über elektronische Steuermittel 35 kann dann die Höhe des Messaufnehmers 10 im Bohrloch 90 automatisch eingestellt werden. Beispielsweise kann die Höhe des Messaufnehmers 10 auf Grund dessen Messwerte so geregelt werden, dass sich der obere Sensor 11 stets oberhalb eines momentanen Füllstandspiegels 80 befindet und der untere Sensor 12 stets unterhalb dieses Füllstandspiegels 80.

Durch die erfindungsgemäße Messvorrichtung 100 wird eine besonders genaue Höhenangabe bezüglich des Füllstandspiegels 80 im Bohrloch 90 ermöglicht. Vorteilhafterweise kann deshalb auch in Fällen, in denen beträchtliche Mengen an Baustoffsuspension aus dem Bohrloch 90 in den umgebenden Boden abfließen, ein dichtendes Verfüllen des Bohrlochs 90 sichergestellt werden.

## Patentansprüche

1. Messvorrichtung zum Ermitteln und/oder Überwachen einer Verfüllung eines Bohrlochs (90) mit einer Baustoffsuspension (85)
mit einem Messaufnehmer (10), welcher zum Einbringen in das Bohrloch (90) ausgebildet ist,
**dadurch gekennzeichnet,**
**dass** der Messaufnehmer (10) einen ersten Sensor (11) zum Messen einer Materialeigenschaft eines den ersten Sensor (11) umgebenden Mediums (75) aufweist,
**dass** der Messaufnehmer (10) beabstandet zum ersten Sensor (11) einen zweiten Sensor (12) zum Messen einer Materialeigenschaft eines den zweiten Sensor (12) umgebenden Mediums (85) aufweist, und
**dass** elektronische Auswertemittel (30) vorgesehen sind, die dazu eingerichtet sind, abhängig von Messwerten der Sensoren (11, 12) festzustellen, ob die Sensoren (11, 12) von verschiedenen Medien (75, 85) umgeben sind, und hiermit eine Aussage zu treffen, ob ein Füllstandspiegel (80) der Baustoffsuspension (85) zwischen den Sensoren (11, 12) liegt.

2. Messvorrichtung nach Anspruch 1,
**dadurch gekennzeichnet,**
**dass** die Sensoren (11, 12) jeweils ein Elektrodenpaar (11, 12) aufweisen zum Bestimmen des elektrischen Leitwerts des Mediums (75, 85), das den jeweiligen Sensor (11, 12) umgibt und eine elektrische Verbindung zwischen Elektroden des jeweiligen Elektrodenpaares (11, 12) erzeugt.

3. Messvorrichtung nach Anspruch 1 oder 2,
**dadurch gekennzeichnet,**
**dass** zum Rückschließen auf die Medien (75, 85), die die Sensoren (11, 12) umgeben, die Sensoren (11, 12) jeweils
einen Sender zum Ausstrahlen elektromagnetischer oder akustischer Wellen und
einen Empfänger aufweisen, der vom zugehörigen Sender abgestrahlte und durch das umgebende Medium (75, 85) transmittierte Wellen misst, und/oder dass die Sensoren (11, 12) jeweils einen Dichtesensor zum Bestimmen der Dichte der sie umgebenden Medien aufweisen.

4. Messvorrichtung nach einem der Ansprüche 1 bis 3,
**dadurch gekennzeichnet,**
**dass** zum Bestimmen, ob der Füllstandspiegel (80) der Baustoffsuspension (85) zwischen den Sensoren (11, 12) liegt, die elektronischen Auswertemittel (30) dazu eingerichtet sind, aus Messwerten der Sensoren (11, 12) eine Differenz abzuleiten, diese mit einem Schwellwert zu vergleichen und bei Überschreiten des Schwellwerts darauf zu schließen, dass der Füllstandspiegel (80) der Baustoffsuspension (85) zwischen den Sensoren (11, 12) liegt.

5. Messvorrichtung nach einem der Ansprüche 1 bis 4,
**dadurch gekennzeichnet,**
**dass** die elektronischen Auswertemittel (30) dazu eingerichtet sind, die Messwerte der Sensoren (11, 12) mit Referenzwerten von Materialien (75, 85) zu vergleichen, insbesondere mit Referenzwerten der Baustoffsuspension (85) und/oder von Grundwasser (75), und abhängig von dem Vergleich auszugeben,
- **dass** der Füllstandspiegel (80) der Baustoffsuspension (85) oberhalb der Sensoren (11, 12) liegt, wenn die Messwerte der Sensoren (11, 12) jeweils einem Referenzwert der Baustoffsuspension (85) ähneln,
- **dass** der Füllstandspiegel (80) der Baustoffsuspension (85) zwischen den Sensoren (11, 12) liegt, wenn der Messwert von nur einem der Sensoren (11, 12) einem Referenzwert der Baustoffsuspension (85) ähnelt, oder
- **dass** der Füllstandspiegel (80) der Baustoffsuspension (85) unterhalb der Sensoren (11, 12) liegt, wenn die Messwerte von keinem Sensor (11, 12) einem Referenzwert der Baustoffsuspension (85) ähneln.

6. Messvorrichtung nach Anspruch 5,
**dadurch gekennzeichnet,**
**dass** in einem Einlernmodus Messwerte der Sensoren (11, 12) als Referenzwerte einlernbar sind.

7. Messvorrichtung nach einem der Ansprüche 1 bis 6,
**dadurch gekennzeichnet,**
**dass** zum Absenken des Messaufnehmers (10) in das Bohrloch (90) und zum Übertragen von Messwerten des Messaufnehmers (10) ein Messkabel (20) vorgesehen ist, das mit dem Messaufnehmer (10) verbunden ist, und dass zur Höhenbestimmung des Messaufnehmers (10) im Bohrloch (90) eine Wegmesseinrichtung (25) vorhanden ist, die eine Länge des Messkabels (20), um welche dieses von einer Kabeltrommel (22) abgerollt ist, ermittelt.

8. Messvorrichtung nach Anspruch 7,
**dadurch gekennzeichnet,**
**dass** die elektronischen Auswertemittel (30) dazu eingerichtet sind, an Hand der mit der Wegmesseinrichtung (25) ermittelten Höhe des Messaufnehmers (10) den Messwerten der Sensoren (11, 12) eine Höhe zuzuordnen und hiermit eine Höhenangabe des Füllstandspiegels (80) der Baustoffsuspension (85) auszugeben.

9. Messvorrichtung nach einem der Ansprüche 1 bis 8,
**dadurch gekennzeichnet,**
**dass** der Messaufnehmer (10) eine längliche Form hat und sich die Sensoren (11, 12) an verschiedenen Höhen entlang der länglichen Form befinden.

10. Messvorrichtung nach einem der Ansprüche 1 bis 9,
**dadurch gekennzeichnet,**
**dass** der Messaufnehmer (10) für eine vertikale Ausrichtung eine Dichte hat, die höher als die der Baustoffsuspension (85) ist.

11. Messvorrichtung nach einem der Ansprüche 1 bis 10,
**dadurch gekennzeichnet,**
**dass** der Messaufnehmer (10) mehr als zwei Sensoren (11, 12) zum Bestimmen einer Materialeigenschaft des jeweils umgebenden Mediums (75, 85) aufweist.

12. Messvorrichtung nach einem der Ansprüche 1 bis 11,
**dadurch gekennzeichnet,**
**dass** zum Einstellen einer Genauigkeit der Höhenbestimmung des Füllstandspiegels (80) ein Abstand zwischen den Sensoren (11, 12) am Messaufnehmer (10) veränderbar ist.

13. Messvorrichtung nach einem der Ansprüche 1 bis 12,
**dadurch gekennzeichnet,**
**dass** ein Antrieb (27) zum Höhenverstellen des Messaufnehmers (10) vorgesehen ist, insbesondere ein Drehantrieb (27) an einer Kabeltrommel (22), auf die das Messkabel (20) gerollt ist, und
**dass** elektronische Steuermittel (35) vorgesehen sind, die dazu eingerichtet sind, über den Antrieb (27) den Messaufnehmer (10) im Bohrloch (90) abzusenken, wenn die elektrischen Auswertemittel (30) feststellen, dass der Füllstandspiegel (80) der Baustoffsuspension (85) unterhalb der Sensoren (11, 12) liegt, und den Messaufnehmer (10) im Bohrloch (90) zu heben, wenn die elektrischen Auswertemittel (30) feststellen, dass der Füllstandspiegel (80) der Baustoffsuspension (85) oberhalb der Sensoren (11, 12) liegt.

14. Bauvorrichtung zum Verfüllen eines Bohrlochs (90) mit einer Baustoffsuspension (85),
wobei die Bauvorrichtung eine Lanze (120) zum Leiten der Baustoffsuspension (85) in das Bohrloch (90) aufweist,
**dadurch gekennzeichnet,**
**dass** eine Messvorrichtung nach einem der Ansprüche 1 bis 13 vorgesehen ist.

15. Verfahren zum Erstellen eines verfüllten Bohrlochs (90),
insbesondere mit einer Bauvorrichtung nach Anspruch 14,
bei dem eine Baustoffsuspension (85) zum Verfüllen eines Bohrlochs (90) in dieses eingebracht wird und
bei dem zum Überwachen des Verfüllens des Bohrlochs (90) ein Messaufnehmer (10) in das Bohrloch (90) eingebracht wird,
**dadurch gekennzeichnet,**
**dass** mit dem Messaufnehmer (10) an einer ersten Höhe und an einer zweiten Höhe im Bohrloch (90) jeweils mindestens ein Messwert zu einer Materialeigenschaft eines den Messaufnehmer (10) umgebenden Mediums aufgenommen wird,
**dass** abhängig von den Messwerten, die an der ersten Höhe und der zweiten Höhe aufgenommen sind, ermittelt wird, ob sich verschiedene Materialien (75, 85) an diesen Höhen befinden, und
**dass** abhängig davon, ob verschiedene Materialien (75, 85) an der ersten und der zweiten Höhe ermittelt werden, eine Aussage getroffen wird, ob ein Füllstandspiegel (80) der Baustoffsuspension (85) zwischen der ersten und der zweiten Höhe liegt.
